# EUROPEAN PATENT APPLICATION

(11) **EP 4 213 249 A2**
(43) Date of publication of application: **19.07.2023**
(21) Application number: 22212241.8
(22) Date of filing: 08.12.2022
(51) Int. Cl.: H01M 4/88, H01M 8/10

(54) **SUPPORT FILM, MULTILAYER BASE MATERIAL, COATER, AND COATING METHOD**

(30) Priority: 17.01.2022 JP 2022004912
(71) Applicant: SCREEN Holdings Co., Ltd., Kyoto 602-8585 (JP)
(72) Inventor: FUKUCHI, Takeshi, Kyoto, 602-8585 (JP); KOZUKA, Daiki, Kyoto, 602-8585 (JP); TAKAGI, Yoshinori, Kyoto, 602-8585 (JP)
(74) Representative: Kilian Kilian & Partner

(57) **Abstract**

An electrolyte membrane 91 having a thickness of equal to or greater than 50 µm is supported using a support film 92. The support film 92 includes a base film 921 and an adhesive layer 922. The adhesive layer 922 covers one surface of the base film 921. The base film 921 has a thickness of equal to or greater than 50 µm and equal to or less than 300 µm. With a PET film as an adherend, the tackiness of the adhesive layer measured by a test method in conformity with JIS Z0237 is equal to or greater than 0.05 N/cm. This allows prevention of separation of an electrolyte membrane from a support film even on the occurrence of swelling of the electrolyte membrane having a large thickness.

## Description

### Technical Field

The present invention relates to a support film for supporting an electrolyte membrane, a multilayer base material including the electrolyte membrane and the support film, a coater that applies catalyst ink to a surface of the electrolyte membrane, and a coating method of coating catalyst ink to a surface of the electrolyte membrane.

### Background Art

A polymer electrolyte fuel cell (PEFC) conventionally known uses an ion-exchange membrane (electrolyte membrane) as an electrolyte. The polymer electrolyte fuel cell uses a catalyst-coated membrane (CCM) with a catalyst layer formed on a surface of the electrolyte membrane. The catalyst-coated membrane is manufactured by applying catalyst ink to the surface of the electrolyte membrane. A conventional apparatus for manufacturing the catalyst-coated membrane is described in Patent Literature 1, for example.

As described in Patent Literature 1, the electrolyte membrane has the property of swelling as it absorbs water to be deformed easily. In response to this, in the apparatus of Patent Literature 1, the electrolyte membrane is transported while being supported on a support film for the purpose of suppressing deformation of the electrolyte membrane.

### Citation List

### Patent Literature

Patent Literature 1: Japanese Patent Application Laid-Open No. 2018-1123

### Summary of Invention

### Technical Problem

According to a technique conventionally known called solid polymer water electrolysis, hydrogen (H₂) is produced through electrolysis of water (H₂O). The solid polymer water electrolysis also uses a catalyst-coated membrane with a catalyst layer formed on a surface of an electrolyte membrane. The electrolyte membrane used for the solid polymer water electrolysis is thicker than the electrolyte membrane used in the polymer electrolyte fuel cell. This causes a problem that the electrolyte membrane will be deformed more largely on the occurrence of swelling of the electrolyte membrane.

The support film described in Patent Literature 1 mentioned above adheres to the electrolyte membrane using the van der Waals' force of the support film itself. On the occurrence of swelling of the electrolyte membrane having a large thickness, however, the adhesion using such van der Waals' force alone may cause separation between the support film and the electrolyte membrane.

The present invention has been made in view of the above-described circumstances, and is intended to provide a technique that allows prevention of separation of an electrolyte membrane from a support film even on the occurrence of swelling of the electrolyte membrane having a large thickness.

### Solution to Problem

To solve the above-described problem, a first aspect of the present invention is intended for a support film for supporting an electrolyte membrane having a thickness of equal to or greater than 50 µm, comprising: a base film; and an adhesive layer covering one surface of the base film, wherein the base film has a thickness of equal to or greater than 50 µm and equal to or less than 300 µm, and with a PET film as an adherend, the tackiness of the adhesive layer measured by a test method in conformity with JIS Z0237 is equal to or greater than 0.05 N/cm.

According to a second aspect of the present invention, in the support film according to the first aspect, the tensile strength of the base film is equal to or greater than 10 kg/mm².

According to a third aspect of the present invention, in the support film according to the first or second aspect, the adhesive layer contains a thermoplastic adhesive.

According to a fourth aspect of the present invention, in the support film according to any one of the first to third aspects, the tackiness is equal to or less than 35 N/cm.

A fifth aspect of the present invention is intended for a multilayer base material comprising: the support film according to any one of the first to fourth aspects; and the electrolyte membrane affixed to the adhesive layer of the support film.

A sixth aspect of the present invention is intended for a coater comprising: a nozzle for applying catalyst ink to a surface of the electrolyte membrane of the multilayer base material according to the fifth aspect; and a transport mechanism that moves the multilayer base material relative to the nozzle.

A seventh aspect of the present invention is intended for a coating method by which, while the multilayer base material according to the fifth aspect is moved relative to a nozzle, catalyst ink is applied to a surface of the electrolyte membrane using the nozzle.

An eighth aspect of the present invention is intended for a coater comprising: an affixing unit that forms a multilayer base material by providing the support film according to any one of the first to fourth aspects with the electrolyte membrane through affixation to the adhesive layer; a nozzle for applying catalyst ink to a surface of the electrolyte membrane of the multilayer base material; and a transport mechanism that moves the multilayer base material relative to the nozzle.

A ninth aspect of the present invention is intended for a coating method comprising the steps of: a) forming a multilayer base material by providing the support film according to any one of the first to fourth aspects with the electrolyte membrane through affixation to the adhesive layer; and b) applying catalyst ink to a surface of the electrolyte membrane using a nozzle while moving the multilayer base material relative to the nozzle.

### Advantageous Effects of Invention

According to the first to ninth aspects, the support film is affixed with the adhesive layer having sufficient tackiness to the electrolyte membrane. Furthermore, setting the thickness of the base film equal to or greater than 50 µm allows the support film to have high rigidity. By doing so, even on the occurrence of swelling of the electrolyte membrane having a large thickness, it is still possible to prevent separation of the electrolyte membrane from the support film.

In particular, according to the second aspect, the support film can be given higher rigidity. By doing so, even on the occurrence of swelling of the electrolyte membrane having a large thickness, it is still possible to suppress deformation of the electrolyte membrane and that of the support film.

In particular, according to the third aspect, it is possible to suppress curing of the adhesive when the electrolyte membrane supported by the support film is heated.

In particular, according to the fourth aspect, separation of the base film from the electrolyte membrane is facilitated.

### Brief Description of Drawings

Fig. 1 is a partial perspective view of a multilayer base material;
Fig. 2 is a view showing results obtained by changing the thickness of a base film to evaluate adhesion to an electrolyte membrane and the amount of deformation of a support film determined by swelling the electrolyte membrane;
Fig. 3 is a view showing results obtained by changing the tensile strength of the base film to evaluate adhesion to the electrolyte membrane and the amount of deformation of the support film determined by swelling the electrolyte membrane;
Fig. 4 is a view showing results obtained by changing the tackiness of an adhesive layer to evaluate adhesion to the electrolyte membrane and the amount of deformation of the support film determined by swelling the electrolyte membrane:
Fig. 5 is a view showing the configuration of a coater according to a first preferred embodiment; and
Fig. 6 is a view showing the configuration of a coater according to a second preferred embodiment.

### Description of Preferred Embodiments

Preferred embodiments of the present invention will be described below by referring to the drawings.

### <1. Multilayer Base Material>

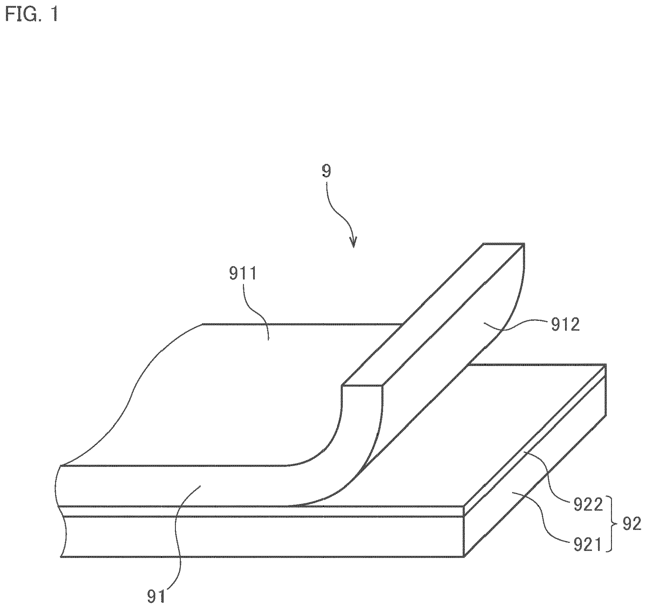

Fig. 1 is a partial perspective view of a multilayer base material 9 according to a preferred embodiment of the present invention. The multilayer base material 9 is an elongated strip-shaped base material used in a step of manufacturing a catalyst-coated membrane (CCM). As shown in Fig. 1, the multilayer base material 9 includes an electrolyte membrane 91 and a support film 92 for supporting the electrolyte membrane 91.

The electrolyte membrane 91 is a thin film (ion-exchange membrane) having ion conductivity. A fluorine-based or hydrocarbon-based polymer electrolyte membrane is used as the electrolyte membrane 91. More specifically, a proton exchange membrane containing perfluorocarbon sulfonic acid is used as the electrolyte membrane 91, for example.

The electrolyte membrane 91 of the present preferred embodiment is used for solid polymer water electrolysis by which hydrogen (H₂) is produced through electrolysis of water (H₂O). While an electrolyte membrane for a polymer electrolyte fuel cell has a thickness from about 5 to about 30 µm, the electrolyte membrane 91 for solid polymer water electrolysis has a larger thickness that is equal to or greater than 50 µm. The thickness of the electrolyte membrane 91 is from 150 to 300 µm, for example.

As shown in Fig. 1, the electrolyte membrane 91 has a first surface 911 to which catalyst ink is to be applied by a coater 1 described later, and a second surface 912 as a back surface relative to the first surface 911. The electrolyte membrane 91 swells with moisture in the atmosphere and shrinks with humidity reduction. Specifically, the electrolyte membrane 91 has the property of being deformed easily in response to humidity in the atmosphere. The electrolyte membrane 91 also swells as it absorbs a solvent in the catalyst ink during application of the catalyst ink.

The support film 92 is a film for suppressing deformation of the electrolyte membrane 91. The electrolyte membrane 91 and the support film 92 are bonded to each other. By doing so, the electrolyte membrane 91 is supported on the support film 92. By not handling the electrolyte membrane 91 alone but by handling the electrolyte membrane 91 in a state of being supported on the support film 92, it becomes possible to suppress deformation of the electrolyte membrane 91. Moreover, using the support film 92 allows the electrolyte membrane 91 of low mechanical strength to be transported without being damaged.

As shown in Fig. 1, the support film 92 includes a base film 921 and an adhesive layer 922.

The base film 921 is a resin film having higher mechanical strength than the electrolyte membrane 91 and having an excellent shape retaining function. Polyethylene terephthalate (PET) is used as a material of the base film 921. Instead of PET, however, a material to be used for forming the base film 921 may be polyethylene naphthalate (PEN), oriented nylon, oriented rigid polyvinyl chloride, or oriented polypropylene (OPP), for example.

The base film 921 has a thickness of equal to or greater than 50 µm and equal to or less than 300 µm. The base film 921 has tensile strength of equal to or greater than 10 kg/mm² at ordinary temperature. If the electrolyte membrane 91 has a large thickness, great force is generated as a result of deformation of the electrolyte membrane 91. In response to this, setting the thickness and tensile strength of the base film 921 properly makes it possible to provide the support film 92 with high rigidity. This allows the electrolyte membrane 91 to be supported while suppressing deformation of the electrolyte membrane 91.

The adhesive layer 922 is a layer of an adhesive covering one surface of the base film 921. The electrolyte membrane 91 is affixed to the adhesive layer 922 of the support film 92. A thermoplastic adhesive is used in the adhesive layer 922. More specifically, an epoxy-based, acrylic, or silicone rubber-based inorganic solvent-type adhesive is usable. With a PET film as an adherend, the tackiness of the adhesive layer 922 measured by a test method in conformity with JIS Z0237 is equal to or greater than 0.05 N/cm. With the presence of the adhesive layer 922 having such sufficient tackiness, it is possible to form favorable adhesion of the support film 92 to the electrolyte membrane 91.

### <2. Experimental Examples>

The following describes results obtained by changing the thickness of the base film 921, the tensile strength of the base film 921, and the tackiness of the adhesive layer 922 to evaluate the characteristics of the support film 92.

### <2-1. Thickness of Support Film>

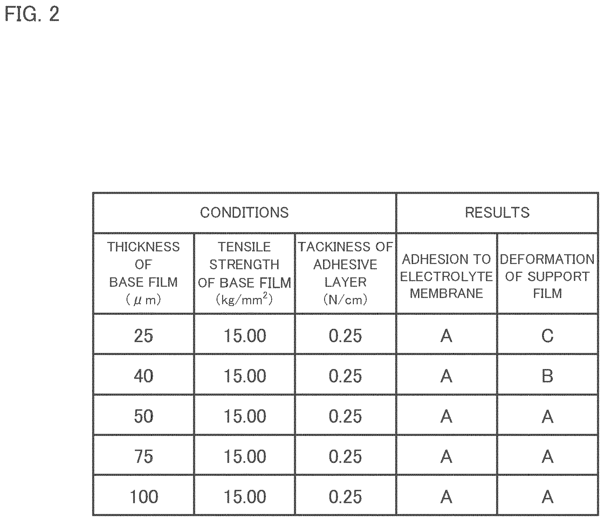

Fig. 2 is a view showing results obtained by changing the thickness of the base film 921 to evaluate adhesion to the electrolyte membrane 91 and the amount of deformation of the support film 92 determined by swelling the electrolyte membrane 91. For the experiment shown in Fig. 2, the tensile strength of the base film 921 at ordinary temperature was fixed at 15 kg/mm². For the experiment shown in Fig. 2, with a PET film as an adherend, the tackiness of the adhesive layer 922 measured by a test method in conformity with JIS Z0237 was fixed at 0.25 N/cm. Then, the thickness of the base film 921 was changed in a range from 25 to 100 µm.

As a result of the experiment shown in Fig. 2, the adhesion of the support film 92 to the electrolyte membrane 91 was rated on the following scale of three grades. A: No separation of the support film 92 from the electrolyte membrane 91 was observed. B: Slight separation of the support film 92 from the electrolyte membrane 91 was observed. C: Partial separation of the support film 92 from the electrolyte membrane 91 was observed. As a result of the experiment shown in Fig. 2, the amount of deformation of the support film 92 determined by swelling the electrolyte membrane 91 was rated on the following scale of three grades. A: No deformation of the support film 92 was observed. B: Slight deformation of the support film 92 was observed. C: Deformation of the support film 92 was observed.

The experimental results in Fig. 2 show that, with any thickness of the base film 921 from 25 to 100 µm, favorable adhesion of the support film 92 to the electrolyte membrane 91 was obtained. Furthermore, if the thickness of the base film 921 is 25 µm, swelling of the electrolyte membrane 91 caused deformation of the support film 92. If the thickness of the base film 921 is 40 µm, swelling of the electrolyte membrane 91 caused slight deformation of the support film 92. Meanwhile, if the thickness of the base film 921 is equal to or greater than 50 µm, swelling of the electrolyte membrane 91 caused substantially no deformation of the support film 92.

It is assumed from the foregoing results that, as the thickness of the base film 921 of less than 50 µm results in lower rigidity of the support film 92 than that in a case where the thickness of the base film 921 is equal to or greater than 50 µm, it caused deformation of the support film 92 in response to swelling of the electrolyte membrane 91. Thus, the thickness of the base film 921 is desirably equal to or greater than 50 µm. More desirably, the thickness of the base film 921 is equal to or greater than 75 µm.

On the other hand, increasing the thickness of the base film 921 excessively makes it difficult to handle the support film 92 or the multilayer base material 9 wound up into a roll. Thus, the thickness of the base film 921 is desirably equal to or less than 300 µm. For example, the thickness of the base film 921 may be set in a range from 125 to 190 µm.

### <2-2. Tensile Strength of Support Film>

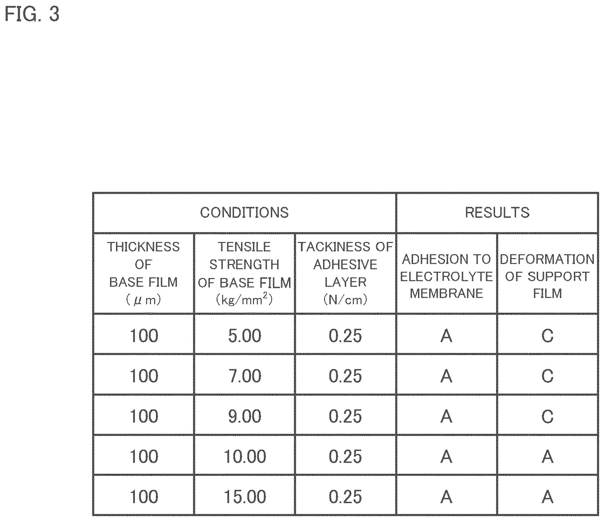

Fig. 3 is a view showing results obtained by changing the tensile strength of the base film 921 to evaluate adhesion to the electrolyte membrane 91 and the amount of deformation of the support film 92 determined by swelling the electrolyte membrane 91. For the experiment shown in Fig. 3, the thickness of the base film 921 was fixed at 100 µm. For the experiment shown in Fig. 3, with a PET film as an adherend, the tackiness of the adhesive layer 922 measured by a test method in conformity with JIS Z0237 was fixed at 0.25 N/cm. Then, the tensile strength of the base film 921 at ordinary temperature was changed in a range from 5 to 15 kg/mm². As a result of the experiment shown in Fig. 3, the adhesion of the support film 92 to the electrolyte membrane 91 and the amount of deformation of the support film 92 determined by swelling the electrolyte membrane 91 were rated on the basis of the same grades as those used in relation to the experiment shown in Fig. 2.

The experimental results in Fig. 3 show that, with any tensile strength of the base film 921 from 5 to 15 kg/mm², favorable adhesion of the support film 92 to the electrolyte membrane 91 was obtained. Furthermore, if the tensile strength of the base film 921 is equal to or less than 9 kg/mm², swelling of the electrolyte membrane 91 caused deformation of the support film 92. Meanwhile, if the tensile strength of the base film 921 is equal to or greater than 10 kg/mm², swelling of the electrolyte membrane 91 caused substantially no deformation of the support film 92.

It is assumed from the foregoing results that, as the tensile strength of the base film 921 of less than 10 kg/mm² results in lower rigidity of the support film 92 than that in a case where the tensile strength of the base film 921 is equal to or greater than 10 kg/mm², it caused deformation of the support film 92 in response to swelling of the electrolyte membrane 91. Thus, the tensile strength of the base film 921 at ordinary temperature is desirably equal to or greater than 10 kg/mm². More desirably, the tensile strength of the base film 921 at ordinary temperature is equal to or greater than 15 kg/mm².

On the other hand, increasing the tensile strength of the base film 921 excessively makes it difficult to handle the support film 92 or the multilayer base material 9 wound up into a roll. Thus, the tensile strength of the base film 921 at ordinary temperature is desirably equal to or less than 50 kg/mm².

### <2-3. Tackiness of Adhesive Layer>

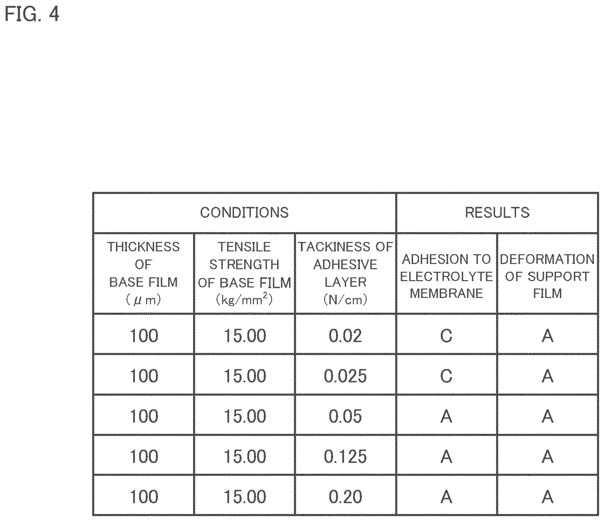

Fig. 4 is a view showing results obtained by changing the tackiness of the adhesive layer 922 to evaluate adhesion to the electrolyte membrane 91 and the amount of deformation of the support film 92 determined by swelling the electrolyte membrane 91. For the experiment shown in Fig. 4, the thickness of the base film 921 was fixed at 100 µm. For the experiment shown in Fig. 4, the tensile strength of the base film 921 at ordinary temperature was fixed at 15 kg/mm². Then, with a PET film as an adherend, the tackiness of the adhesive layer 922 measured by a test method in conformity with JIS Z0237 was changed in a range from 0.02 to 0.2 N/cm. As a result of the experiment shown in Fig. 4, the adhesion of the support film 92 to the electrolyte membrane 91 and the amount of deformation of the support film 92 determined by swelling the electrolyte membrane 91 were rated on the basis of the same grades as those used in relation to the experiment shown in Fig. 2.

The experimental results in Fig. 4 show that, with any tackiness of the adhesive layer 922 from 0.02 to 0.2 N/cm, swelling of the electrolyte membrane 91 caused substantially no deformation of the support film 92. Furthermore, if the tackiness of the adhesive layer 922 is less than 0.05 N/cm, comparatively low adhesion of the support film 92 to the electrolyte membrane 91 was observed. More specifically, partial separation was observed between the electrolyte membrane 91 and the adhesive layer 922. By contrast, if the tackiness of the adhesive layer 922 is equal to or greater than 0.05 N/cm, favorable adhesion of the support film 92 to the electrolyte membrane 91 was observed. More specifically, no separation of the electrolyte membrane 91 from the adhesive layer 922 was observed.

The foregoing results show that, in order to prevent separation of the electrolyte membrane 91 from the support film 92, the tackiness of the adhesive layer 922 measured by a test method in conformity with JIS Z0237 with a PET film as an adherend is desirably equal to or greater than 0.05 N/cm. More desirably, the tackiness of the adhesive layer 922 measured by a test method in conformity with JIS Z0237 with a PET film as an adherend is equal to or greater than 0.125 N/cm.

However, the support film 92 is eventually required to be separated from the electrolyte membrane 91. Hence, if the tackiness of the adhesive layer 922 is too high, it becomes hard to separate the support film 92 from the electrolyte membrane 91. For this reason, the tackiness of the adhesive layer 922 measured by a test method in conformity with JIS Z0237 with a PET film as an adherend is desirably equal to or less than 35 N/cm, for example.

### <3. Coater>

### <3-1. First Preferred Embodiment>

By using the foregoing multilayer base material 9, the coater 1 that applies catalyst ink to the first surface 911 of the electrolyte membrane 91 will be described next.

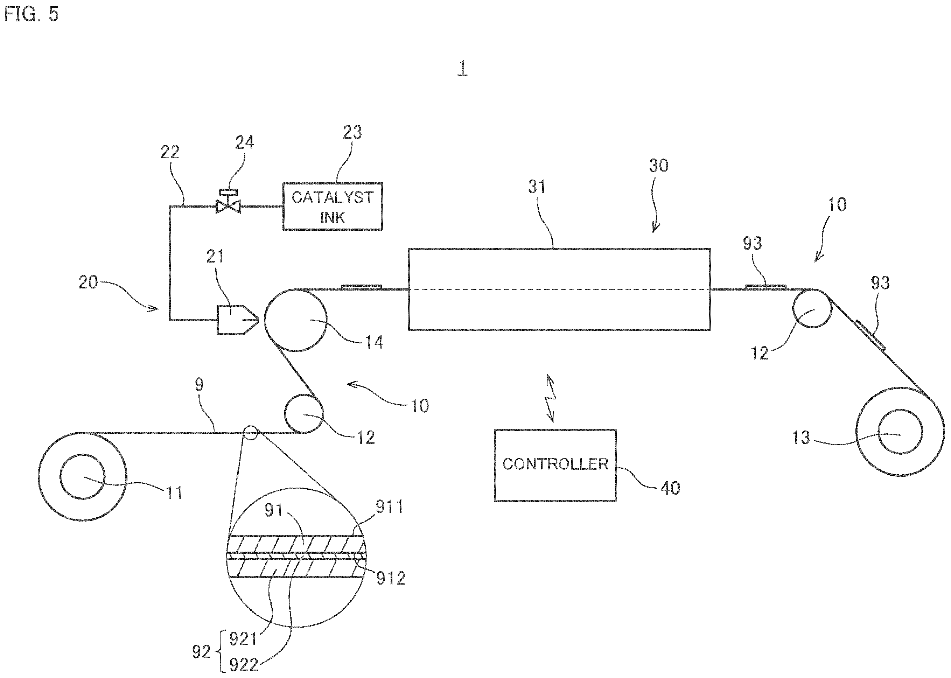

Fig. 5 is a view showing the configuration of the coater 1 according to a first preferred embodiment. The coater 1 is an apparatus that forms a catalyst layer 93 to become an electrode on the first surface 911 of the electrolyte membrane 91 while transporting the elongated strip-shaped multilayer base material 9 in a lengthwise direction in a step of manufacturing a catalyst-coated membrane used for solid polymer water electrolysis. As shown in Fig. 5, the coater 1 includes a transport mechanism 10, a coating unit 20, a drying unit 30, and a controller 40.

The transport mechanism 10 is a mechanism that transports the multilayer base material 9 in a transport direction conforming to the lengthwise direction of the multilayer base material 9. The transport mechanism 10 of the present preferred embodiment includes an unwinding roller 11, a plurality of transport rollers 12, and a take-up roller 13. The electrolyte membrane 91 and the support film 92 are bonded to each other in advance by a different apparatus to form the multilayer base material 9, and this multilayer base material 9 is placed on the unwinding roller 11. The multilayer base material 9 is drawn from the unwinding roller 11 and is transport along a transport path defined by the transport rollers 12. Each of the transport rollers 12 rotates about a horizontal axis to guide the multilayer base material 9 downstream of the transport path. After being transported, the multilayer base material 9 is collected on the take-up roller 13. The position of the transport roller 12 or the number of the transport rollers 12 are not always required to conform to the position or number shown in Fig. 5.

The coating unit 20 is a mechanism for applying catalyst ink to the first surface 911 of the electrolyte membrane 91 of the multilayer base material 9 transported by the transport mechanism 10. Electrode paste prepared by dispersing particles containing a catalyst material (platinum (Pt), for example) in a solvent such as alcohol is used as the catalyst ink.

The multilayer base material 9 is supported on a backup roller 14 further functioning as a transport roller at a position downstream of the transport path from the unwinding roller 11 and upstream of the transport path from the drying unit 30. The backup roller 14 is a roller having a circular columnar shape or a circular cylindrical shape, and rotates about a horizontal axis while contacting the support film 92 of the multilayer base material 9.

The coating unit 20 includes a coating nozzle 21 facing the first surface 911 of the electrolyte membrane 91 of the multilayer base material 9 supported on the backup roller 14. In response to the rotation of the backup roller 14, the multilayer base material 9 moves relative to the coating nozzle 21. For example, a nozzle used as the coating nozzle 21 is what is called a slit nozzle having an ejection port like a slit extending in a width direction (a horizontal direction and orthogonal to the lengthwise direction of the multilayer base material 9).

The coating nozzle 21 is connected along a flow path to a catalyst ink source 23 through a liquid feed pipe 22. The liquid feed pipe 22 is provided with an on-off valve 24. In this configuration, as the on-off valve 24 is opened, the catalyst ink is supplied from the catalyst ink source 23 to the coating nozzle 21 through the liquid feed pipe 22. Then, the catalyst ink is ejected through the ejection port of the coating nozzle 21 toward the first surface 911 of the electrolyte membrane 91 of the multilayer base material 9 supported on the backup roller 14. By doing so, the catalyst ink is applied to the first surface 911 of the electrolyte membrane 91.

In the present preferred embodiment, the on-off valve 24 is opened and closed at a constant period to eject the catalyst ink discontinuously through the ejection port of the coating nozzle 21. By doing so, the catalyst ink is applied intermittently at a constant interval in the transport direction to the first surface 911 of the electrolyte membrane 91. Alternatively, the on-off valve 24 may be opened continuously to apply the catalyst ink seamlessly in the transport direction to the first surface 911 of the electrolyte membrane 91.

The coating nozzle 21 is not always required to be configured to eject the catalyst ink to the multilayer base material 9 supported on the backup roller 14. For example, the coating nozzle 21 may be configured to eject the catalyst ink to the electrolyte membrane 91 of the multilayer base material 9 stretched between adjacent rollers. The coating nozzle 21 may also be configured to inject the catalyst ink in a spray pattern to the electrolyte membrane 91.

The drying unit 30 is arranged downstream of the transport path from the coating nozzle 21. The drying unit 30 includes a drying furnace 31 for drying the catalyst ink. In the drying furnace 31, heated gas (hot air) is blown on the electrolyte membrane 91 of the multilayer base material 9 transported by the transport mechanism 10. This heats the catalyst ink applied to the first surface 911 of the electrolyte membrane 91 to vaporize the solvent in the catalyst ink. By doing so, the catalyst ink is dried to form a catalyst layer 93 on the first surface 911 of the electrolyte membrane 91. The catalyst ink is not always required to be dried by the method of supplying the hot air. The drying unit 30 may be configured to dry the catalyst ink by another method such as light irradiation or pressure reduction.

As described above, the coater 1 sequentially performs the steps of drawing the multilayer base material 9 from the unwinding roller 11, applying the catalyst ink to the first surface 911 of the electrolyte membrane 91, and drying the catalyst ink using the drying furnace 31. As a result, the catalyst layer 93 is formed on the first surface 911 of the electrolyte membrane 91. In the coater 1, the electrolyte membrane 91 is always supported on the support film 92. This suppresses deformation to be caused by swelling of the electrolyte membrane 91.

The controller 40 is means for controlling the operation of each unit in the coater 1. The controller 40 is configured using a computer including a processor such as a CPU, a memory such as a RAM, and a storage unit such as a hard disk drive. The storage unit stores a computer program for implementing the coating and drying processes described above.

The controller 40 is communicably connected to each of the transport mechanism 10, the on-off valve 24, and the drying furnace 31. The controller 40 controls the operation of each of the foregoing units in the coater 1 by following the computer program. By doing so, the coating and drying processes proceed in the coater 1.

In the foregoing coating unit 20, applying the catalyst ink to the electrolyte membrane 91 causes the solvent in the catalyst ink to penetrate into the electrolyte membrane 91. As a result, the electrolyte membrane 91 swells. In particular, as the electrolyte membrane 91 for solid polymer water electrolysis has a thickness of equal to or greater than 50 µm, the swelling is likely to cause large deformation. In this regard, in the present preferred embodiment, the base film 921 having a thickness of equal to or greater than 50 µm is affixed across the adhesive layer 922 to the second surface 912 of the electrolyte membrane 91. This makes it possible to suppress the deformation of the electrolyte membrane 91. Even if the electrolyte membrane 91 is deformed to some extent by the swelling, it is still possible to prevent separation of the electrolyte membrane 91 from the support film 92.

In a catalyst-coated membrane for solid polymer water electrolysis, the amount of platinum supported in the catalyst layer 93 is required to be equal to or greater than 0.5 mg/cm². While the amount of platinum supported in a catalyst layer is less than 0.5 mg/cm² in a catalyst-coated membrane for a polymer electrolyte fuel cell, the amount of supported platinum is greater in the catalyst-coated membrane for solid polymer water electrolysis. More specifically, in the catalyst-coated membrane for solid polymer water electrolysis, the amount of platinum supported in the catalyst layer 93 is from 0.5 to 1.0 mg/cm², for example.

In order to increase the amount of platinum supported in the catalyst layer 93, it is required to increase the amount of the catalyst ink per unit area to be applied to the electrolyte membrane 91 at the coating unit 20 described above. Such increase results in a larger amount of the solvent to penetrate into the electrolyte membrane 91 to cause the electrolyte membrane 91 to swell more easily. In response to this, in the present preferred embodiment, the base film 921 having a thickness of equal to or greater than 50 µm is affixed across the adhesive layer 922 to the second surface 912 of the electrolyte membrane 91, as described above. This makes it possible to suppress deformation of the electrolyte membrane 91. Even if the electrolyte membrane 91 is deformed to some extent by swelling, it is still possible to prevent separation of the electrolyte membrane 91 from the support film 92.

In the foregoing drying unit 30, not only the catalyst ink but also the adhesive layer 922 is heated. More specifically, the adhesive layer 922 is heated to a temperature from 50 to 160°C. In this regard, in the present preferred embodiment, the thermoplastic adhesive is used in the adhesive layer 922. Thus, heating the adhesive layer 922 in the drying unit 30 does not cause a situation where the adhesive layer 922 is cured to increase adhesion to the electrolyte membrane 91 to an excessively high level. This avoids a problem that difficulty will be imposed in separating the support film 92 from the electrolyte membrane 91 after implementation of the drying process This further prevents the adhesive from remaining on the second surface 912 of the electrolyte membrane 91 after separation of the support film 92 from the electrolyte membrane 91.

### <3-2. Second Preferred Embodiment>

By using the foregoing multilayer base material 9, a second preferred embodiment of the coater 1 that applies catalyst ink to the first surface 911 of the electrolyte membrane 91 will be described next.

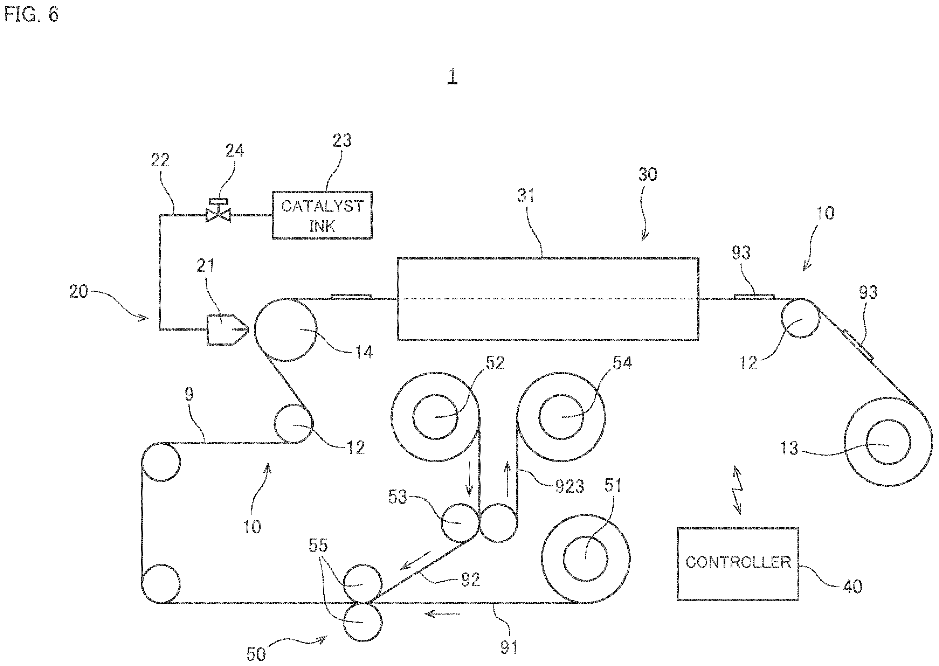

Fig. 6 is a view showing the configuration of the coater 1 according to the second preferred embodiment. In the foregoing first preferred embodiment, the electrolyte membrane 91 and the support film 92 are bonded to each other by the apparatus different from the coater 1. By contrast, in the second preferred embodiment, the electrolyte membrane 91 and the support film 92 are bonded to each other inside the coater 1.

As shown in Fig. 6, the coater 1 of the second preferred embodiment includes an affixing unit 50, a transport mechanism 10, a coating unit 20, a drying unit 30, and a controller 40. Structures of the transport mechanism 10 except the unwinding roller 11, the coating unit 20, the drying unit 30, and the controller 40 are comparable to the corresponding elements of the first preferred embodiment described above, so that explanations overlapping between such elements will be omitted.

The affixing unit 50 includes an electrolyte membrane supply roller 51, a support film supply roller 52, a release roller 53, a release film collection roller 54, and bonding rollers 55 in a pair.

The electrolyte membrane 91 in a roll shape is placed on the electrolyte membrane supply roller 51. The electrolyte membrane 91 is drawn from the electrolyte membrane supply roller 51. The support film 92 in a roll shape is placed on the support film supply roller 52. A release film 923 is affixed to a surface of the adhesive layer 922 of the support film 92. Specifically, the support film 92 placed on the support film supply roller 52 has three layers including the base film 921, the adhesive layer 922, and the release film 923.

The release roller 53 is a roller for releasing the release film 923 from the support film 92 drawn from the support film supply roller 52. After the support film 92 passes through the release roller 53, the release film 923 is transported toward the release film collection roller 54 and is collected on the release film collection roller 54. After passage through the release roller 53, the base film 921 and the adhesive layer 922 are transported toward the bonding rollers 55.

The bonding rollers 55 in a pair are rollers for bonding the electrolyte membrane 91 and the support film 92 to each other after the release film 923 is released from the support film 92. One of the bonding rollers 55 in a pair is made of rubber. The other of the bonding rollers 55 in a pair is made of metal. The bonding rollers 55 in a pair have outer peripheral surfaces facing each other, and are pressurized by a pressure mechanism not shown in the drawings in a direction in which the bonding rollers 55 get closer to each other.

The electrolyte membrane 91 and the support film 92 are introduced into between the bonding rollers 55 in a pair. The first surface 911 of the electrolyte membrane 91 contacts the bonding roller 55 made of rubber. The base film 921 of the support film 92 contacts the bonding roller 55 made of metal. During passage between the bonding rollers 55 in a pair, the adhesive layer 922 of the support film 92 and the second surface 912 of the electrolyte membrane 91 are adhered to each other. By doing so, the electrolyte membrane 91 is affixed to the adhesive layer 922. As a result, the elongated strip-shaped multilayer base material 9 composed of the electrolyte membrane 91 and the support film 92 is formed.

The multilayer base material 9 is thereafter transported downstream by the transport mechanism 10. Then, like in the foregoing first preferred embodiment, application of the catalyst ink at the coating unit 20 and the drying process at the drying furnace 31 are performed sequentially. As a result, the catalyst layer 93 is formed on the first surface 911 of the electrolyte membrane 91.

Like in the coater 1 of the first preferred embodiment, in the coater 1 of the second preferred embodiment, the catalyst ink is applied and the drying process is performed while the support film 92 including the adhesive layer 922 is affixed to the second surface 912 of the electrolyte membrane 91. This makes it possible to suppress deformation of the electrolyte membrane 91. Even if the electrolyte membrane 91 is deformed to some extent by swelling, it is still possible to prevent separation of the electrolyte membrane 91 from the support film 92.

In the coater 1 of the second preferred embodiment, the electrolyte membrane 91 and the support film 92 are bonded to each other inside the coater 1. This eliminates the need for transporting the multilayer base material 9 resulting from the bonding from an apparatus to other apparatus.

### <4. Modifications>

While the principal preferred embodiments of the present invention have been described above, the present invention is not limited to the foregoing preferred embodiments.

The coater 1 of the foregoing preferred embodiments applies the catalyst ink to the electrolyte membrane 91 while transporting the elongated strip-shaped multilayer base material 9. However, the coater may be configured to place the sheet-like multilayer base material 9 on a stationary stage, and apply the catalyst ink to the electrolyte membrane 91 while moving a coating nozzle relative to the placed multilayer base material 9. Specifically, what is required of the coater 1 is to apply the catalyst ink to the electrolyte membrane 91 using the coating nozzle while moving one of the multilayer base material 9 and the coating nozzle relative to the other.

The support film 92 and the multilayer base material 9 described in the foregoing preferred embodiments are employed for manufacturing a catalyst-coated membrane used for solid polymer water electrolysis. However, the support film and the multilayer base material of the present invention may be used for purpose other than solid polymer water electrolysis. For example, the support film and the multilayer base material of the present invention may be employed for manufacturing a catalyst-coated membrane used in a fuel cell.

The support film and the multilayer base material of the present invention may be employed for manufacturing a membrane electrode assembly used in an organic hydride production device. This organic hydride production device is to produce organic hydride such as methylcyclohexane by hydrogenating an aromatic compound such as toluene. This organic hydride production device is used in a liquid organic hydrogen carrier (LOHC) process of storing and transporting hydrogen, for example.

Particular structures of the multilayer base material or those of the coater may differ from those shown in each drawing of the present application. Moreover, adoption or non-adoption of each element described in the foregoing embodiments or modifications may be determined appropriately in a range not causing consistency.

### Reference Signs List

- 1: Coater
- 9: Multilayer base material
- 10: Transport mechanism
- 20: Coating unit
- 21: Coating nozzle
- 30: Drying unit
- 40: Controller
- 50: Affixing unit
- 91: Electrolyte membrane
- 92: Support film
- 93: Catalyst layer
- 921: Base film
- 922: Adhesive layer
- 923: Release film

## Claims

1. A support film (92) for supporting an electrolyte membrane (91) having a thickness of equal to or greater than 50 µm, comprising:
a base film (921); and
an adhesive layer (922) covering one surface of said base film (921), wherein
said base film (921) has a thickness of equal to or greater than 50 µm and equal to or less than 300 µm, and
with a PET film as an adherend, the tackiness of said adhesive layer (922) measured by a test method in conformity with JIS Z0237 is equal to or greater than 0.05 N/cm.

2. The support film (92) according to claim 1, wherein
the tensile strength of said base film (921) is equal to or greater than 10 kg/mm².

3. The support film (92) according to claim 1 or 2, wherein
said adhesive layer (922) contains a thermoplastic adhesive.

4. The support film (92) according to any one of claims 1 to 3, wherein
said tackiness is equal to or less than 35 N/cm.

5. A multilayer base material (9) comprising:
the support film (92) according to any one of claims 1 to 4; and
said electrolyte membrane (91) affixed to said adhesive layer (922) of said support film (92).

6. A coater (1) comprising:
a nozzle for applying catalyst ink to a surface of said electrolyte membrane (91) of the multilayer base material (9) according to claim 5; and
a transport mechanism (10) that moves said multilayer base material (9) relative to said nozzle.

7. A coating method by which, while the multilayer base material (9) according to claim 5 is moved relative to a nozzle, catalyst ink is applied to a surface of said electrolyte membrane (91) using said nozzle.

8. A coater (1) comprising:
an affixing unit (50) that forms a multilayer base material (9) by providing the support film (92) according to any one of claims 1 to 4 with said electrolyte membrane (91) through affixation to said adhesive layer (922);
a nozzle for applying catalyst ink to a surface of said electrolyte membrane (91) of said multilayer base material (9); and
a transport mechanism (10) that moves said multilayer base material (9) relative to said nozzle.

9. A coating method comprising the steps of:
a) forming a multilayer base material (9) by providing the support film (92) according to any one of claims 1 to 4 with said electrolyte membrane (91) through affixation to said adhesive layer (922); and
b) applying catalyst ink to a surface of said electrolyte membrane (91) using a nozzle while moving said multilayer base material (9) relative to said nozzle.
